# FASCICULE DE BREVET EUROPEEN

(11) **EP 2 356 806 B1**
(45) Date de publication et mention de la délivrance du brevet: **09.05.2012**
(21) Numéro de dépôt: 09795464.8
(22) Date de dépôt: 19.11.2009
(51) Int. Cl.: A63H 30/04, G08C 17/02, H04M 1/725

(54) **DISPOSITIF DE PILOTAGE D'UN DRONE**
EINRICHTUNG ZUM FLIEGEN EINER DRONE
DEVICE FOR PILOTING A DRONE

(30) Priorité: 27.11.2008 FR 0806665
(43) Date de publication de la demande: 17.08.2011
(73) Titulaire: Parrot, 75010 Paris (FR)
(72) Inventeur: LEFEBURE, Martin, F-92400 Courbevoie (FR)
(74) Mandataire: Dupuis-Latour, Dominique
(86) Numéro de dépôt international: PCT/FR2009/052217
(87) Numéro de publication internationale: WO 2010/061099

(56) Documents cités:
- WO-A-01/43473
- WO-A-2005/027550
- WO-A-2006/056231
- WO-A-2008/056051
- US-A1- 2005 048 918

## Description

La présente invention concerne un dispositif de pilotage d'un drone, notamment d'un drone à voilure tournante.

L'invention trouve une application particulièrement avantageuse dans le domaine des jouets radiocommandés pouvant être utilisés par des enfants, notamment dans des environnements d'intérieur comme par exemple une pièce d'une maison ou d'un appartement.

Un drone est un engin volant piloté à distance au moyen d'un dispositif de commande. Certains drones sont dits à voilure tournante, ce qui comprend toutes les formules de modèles réduits d'hélicoptères connues.

Le WO 2008/056051 A2 (Parrot) décrit un système de jeu mettant en oeuvre des jouets télécommandés, notamment des drones télécommandés. Le jeu s'exécute par pilotage à vue du drone, par exemple le long d'un circuit virtuel dont l'image est superposée à l'image réelle captée par la caméra du drone. Des points de passage virtuels sont définis et visualisés par exemple sous forme d'anneaux virtuels flottant dans le vide, que le drone doit traverser.

Comme on le comprendra, il est nécessaire dans un tel jeu de pouvoir piloter le drone de façon très précise. Il en est de même dans les jeux de poursuite, dans lesquels un drone piloté par un joueur tente d'abattre une cible fixe ou mobile, par exemple un drone piloté par un autre joueur.

Jusqu'à présent, le pilotage d'un drone s'effectuait à partir d'une radio-commande munie de deux leviers mobiles, où :
- pour le premier levier, un premier axe contrôle le tangage du drone (dans un sens pour avancer et dans le sens opposé pour reculer) tandis qu'un second axe contrôle le pivot du drone (inclinaison du levier dans un sens pour le pivot gauche et dans le sens opposé pour le pivot droit) ;
- pour le second levier, un premier axe contrôle la puissance des moteurs du drone (dans un sens pour augmenter cette puissance et dans le sens opposé pour la diminuer) tandis qu'un second axe contrôle le roulis (dans un sens pour avancer en crabe sur un côté et dans un autre sens pour avancer en crabe sur le côté opposé).

Concrètement, la maîtrise de ces commandes est longue et requiert un entraînement important, avec le risque éventuel d'endommager le drone pendant cette phase d'apprentissage.

En remplacement ou en combinaison des leviers, il est également connu d'utiliser des boutons pour piloter un drone.

Le US 2005/0048918 décrit un dispositif de commande d'un tel drone, en l'espèce un dirigeable miniature, au moyen d'un dispositif de commande de type téléphone portable. L'appui sur les touches du téléphone est détecté et transformé en commandes de pilotage du dirigeable : accélération ou ralentissement du moteur, rotation du gouvernail, etc. Simultanément, une caméra embarquée par le dirigeable capte une image qui est transmise au téléphone et affichée sur l'écran de celui-ci.

La présente invention résulte de la constatation qu'aucun des dispositifs de commande précédemment mentionnés ne permet un contrôle simple du vol d'un drone, notamment un contrôle intuitif.

Aussi, l'un des buts de l'invention est de proposer un dispositif qui permette à des personnes non initiées au pilotage, comme des enfants, de pouvoir piloter un drone sans avoir à contrôler un nombre trop élevé de leviers et/ou de boutons.

Pour cela, l'invention prévoit tout d'abord d'utiliser un type particulier de drone, à savoir un drone pourvu d'un système de stabilisation autonome en vol stationnaire en l'absence de toute commande de l'utilisateur.

Un tel type de drone est par exemple décrit dans le WO 2009/109711 A2 (Parrot).

Ce type de drone est particulièrement adapté aux personnes non entraînées, pour lesquelles il est difficile de stabiliser un drone à voilure tournante à l'aide des classiques commandes à levier en jouant sur les gaz, le roulis, le tangage et le lacet de façon plus ou moins simultanée et interdépendante. Ces difficultés sont encore accrues lorsqu'il s'agit d'un modèle réduit radiocommandé pour lequel l'utilisateur n'a aucun retour d'effort, et doit seulement se contenter de voir l'engin et apprécier sa position dans l'espace, ce qui requiert une très bonne connaissance de la physique du vol pour interpréter cette position et comprendre quelles actions doivent être effectuées pour atteindre le point d'équilibre.

Le document précité décrit un drone pourvu de moyens de stabilisation automatique en vol stationnaire permettant notamment, lorsque le point d'équilibre est obtenu, d'apporter les corrections nécessaires pour maintenir ce point fixe par "trimming", c'est-à-dire correction des infimes variations de translation dues aux effets externes tels que déplacement d'air et dérive des capteurs.

Un tel drone à stabilisation automatique et autonome en vol stationnaire permet ainsi à des personnes non initiées au pilotage, notamment les enfants, de pouvoir néanmoins piloter un drone à voilure tournante sans avoir à agir directement sur les commandes traditionnelles de vol, au profit d'un pilotage intuitif basé sur des déplacements horizontaux et verticaux. Le mouvement dynamique du drone est ainsi transformé en un déplacement entre points d'équilibre successifs par des commandes simples telles que monter, descendre, tourner à droite ou à gauche, avancer, reculer, etc., chaque commande étant attribuée à une touche particulière du boîtier de télécommande. Lorsque l'utilisateur relâche toutes les touches, alors le drone se remet automatiquement en vol stationnaire, dans la nouvelle position qu'il a atteinte.

Le point de départ de l'invention réside dans l'adaptation du pilotage d'un tel type de drone par un boîtier de télécommande comportant des capteurs d'inclinaison.

On connaît de nombreux dispositifs comportant des capteurs d'inclinaison, notamment des téléphones portables. Le WO 2005/027550 A1 (Nokia Corporation) décrit un tel téléphone portable muni de moyens permettant de détecter l'inclinaison du téléphone dans deux axes orthogonaux par rapport à l'horizontale.

Le WO 01/43473 A1 (Telbird Ltd.), quant à lui, décrit la manière d'utiliser un tel téléphone pour commander à distance diverses actions, par exemple le déplacement du curseur dans le texte affiché sur un écran. L'invention part de la constatation que le mode de déplacement consistant à aller d'un point d'équilibre à un autre, s'il simplifie grandement le pilotage par un utilisateur non entraîné, n'est pas toujours le plus efficace. Ceci arrive notamment lorsque des mouvements rapides sont nécessaires, par exemple dans des jeux de poursuite impliquant des manoeuvres d'évitement, des recalages rapides de l'attitude du drone lorsqu'il s'agit de viser une cible mobile, etc.

Pour ces raisons, il serait très souhaitable de disposer d'une plus grande flexibilité dans le mode de pilotage du drone en fonction du contexte, avec la possibilité de disposer d'un mode de pilotage plus réactif dans certaines situations nécessitant une prise de contrôle plus directe du drone par l'utilisateur.

À cet effet, l'invention propose un dispositif de pilotage d'un drone du type exposé ci-dessus, ce dispositif comprenant : un détecteur d'inclinaisons du boîtier du dispositif ; une dalle tactile affichant une pluralité de zones tactiles ; des moyens pour détecter des signaux émis par le détecteur d'inclinaisons du boîtier, ou par les zones tactiles ; et des moyens pour transformer lesdits signaux détectés en commandes de pilotage, et pour transmettre au drone ces commandes de pilotage.

De façon caractéristique de l'invention, le dispositif comprend en outre des moyens, commandés par l'une des zones tactiles formant bouton d'activation/désactivation, pour faire basculer alternativement le mode de pilotage du drone entre : (i) un mode d'activation du système de stabilisation autonome du drone, mode dans lequel lesdites commandes de pilotage transmises au drone résultent de la transformation des signaux émis par les zones tactiles, et (ii) un mode de désactivation du système de stabilisation autonome du drone, mode dans lequel lesdites commandes de pilotage transmises au drone résultent de la transformation des signaux émis par le détecteur d'inclinaisons du boîtier.

Un tel dispositif repose sur une redéfinition complète de l'interface homme-machine pour commander des manoeuvres et des commandes de pilotage.

De fait certaines manoeuvres de pilotage, qui nécessitaient différentes actions à effectuer par l'opérateur sur des commandes à leviers ou à boutons dans l'art antérieur, peuvent être désormais effectuées de façon intuitive par l'opérateur par inclinaisons du dispositif selon l'invention : par exemple, pour piloter un drone à voilure tournante de façon à le faire "avancer", il suffit à l'utilisateur d'incliner son dispositif à accéléromètre selon l'axe de tangage correspondant.

Ce mode de pilotage, extrêmement réactif, induit toutefois une instabilité relativement importante dans l'équilibre du drone, et il ne doit pouvoir être utilisé qu'à bon escient, par exemple dans les déplacements rapides, les situations de poursuite, etc.

Tout l'intérêt de l'invention est, précisément, de pouvoir n'activer ce mode que de façon sélective, au choix de l'utilisateur, le mode de pilotage par défaut étant le mode de pilotage avec stabilisation automatique et autonome du drone, le déplacement de ce dernier étant opéré par des commandes visant seulement à déplacer dans l'espace le point d'équilibre stabilisé. Ce dernier mode de fonctionnement est bien adapté aux phases de vol lent, aux périodes de guet ou d'approche dans les jeux de poursuite, etc.

Pour passer d'un mode à l'autre, il suffit au joueur d'appuyer sur le bouton d'activation/désactivation de la dalle tactile, ce qui peut se faire de façon tout à fait intuitive, et sans quitter des yeux l'image de la scène captée par la caméra du drone et affichée sur l'écran du dispositif.

Selon diverses formes de réalisation subsidiaires avantageuses :
- le dispositif comprend des moyens de réinitialisation du repère du dispositif, activés à chaque basculement vers ledit mode de désactivation ;
- le dispositif est un appareil multimédia portable de type téléphone cellulaire et/ou lecteur de contenus multimédia ;
- la dalle tactile comprend au moins quatre zones tactiles pour commander des fonctions élémentaires de pilotage activées par contact de ces zones tactiles, lesdites fonctions étant des fonctions du groupe comprenant : décoller, atterrir, monter, descendre, pivoter à droite, pivoter à gauche, avancer, reculer, translater vers la droite, translater vers la gauche ;
- le dispositif comprend des moyens pour commander un atterrissage automatique d'urgence lorsque le dispositif de pilotage est retourné ;
- le dispositif comprend des moyens pour afficher sur la dalle tactile une image prise par une caméra embarquée sur le drone ;

L'invention concerne également un procédé de pilotage d'un drone pourvu d'un système de stabilisation autonome du drone en vol stationnaire en l'absence de toute commande d'un utilisateur, au moyen d'un dispositif tel que précité, comprenant les étapes suivantes :
- détecter des signaux émis par les zones tactiles et par le détecteur d'inclinaisons du boîtier ;
- dans un mode d'activation du système de stabilisation autonome du drone, transformer en commandes de pilotage les signaux émis par lesdits zones tactiles ;
- alternativement, dans un mode de désactivation du système de stabilisation autonome du drone, transformer en commandes de pilotage les signaux émis par ledit détecteur d'inclinaisons du boîtier ;
- transmettre au drone lesdites commandes de pilotage ;
- dans ledit mode d'activation :
   · stabiliser le drone en vol stationnaire en l'absence de commande de pilotage émanant du dispositif, et
   · déplacer le drone d'un point d'équilibre à un autre en fonction desdites commandes de pilotage en cas de transmission au drone de commandes de pilotage ;
- alternativement, dans ledit mode de désactivation, contrôler le mouvement du drone par lesdites commandes de pilotage transmises au drone, ces commandes correspondant à des fonctions élémentaires de pilotage activées par contact desdites zones tactiles.

Lesdites fonctions élémentaires de pilotage peuvent notamment être des fonctions du groupe comprenant : décoller, atterrir, monter, descendre, pivoter à droite, pivoter à gauche, avancer, reculer, translater vers la droite, translater vers la gauche.

On va maintenant décrire un exemple de mise en oeuvre de l'invention, en référence à la Figure unique annexée qui est une représentation schématique d'un dispositif de pilotage et d'un drone pouvant être commandé par des inclinaisons de ce dispositif, conformément à l'invention.

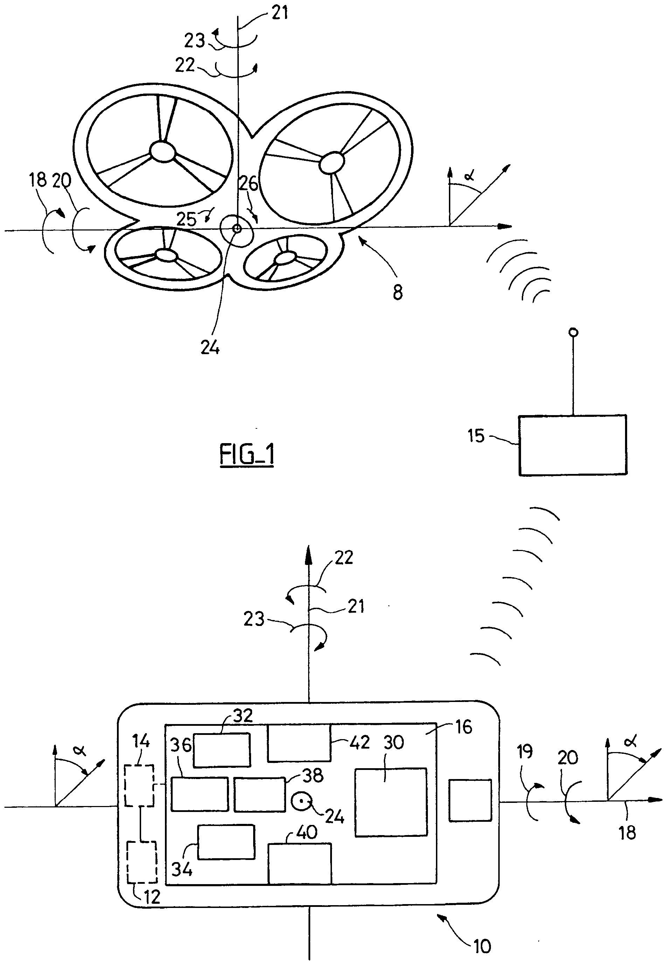

Comme précédemment indiqué, le drone est typiquement un engin volant de faibles dimensions, tel qu'un modèle réduit d'hélicoptère pouvant être mono-rotor avec rotor anti-couple, à tandem à birotor banane, "Kamof" à rotors coaxiaux contrarotatifs ou encore un engin à quatre rotors, également dénommé "quadricoptère" 8 (figure 1) par la suite.

Conformément à l'invention, des fonctions élémentaires de pilotage sont prédéfinies pour commander des opérations de vol exécutées par le drone au moyen de ses actionneurs tels que moteur(s), volet(s), etc. Dans cet exemple, ces fonctions comprennent le tangage, le roulis, le lacet et la variation d'altitude. Pour rappel, ces fonctions sont expliquées ci-dessous en référence aux axes 18, 21 et 24 définissant un repère orthogonal :
- le tangage est l'inclinaison du drone par rapport à un premier axe 18 compris dans le plan du quadricoptère 8. Un tangage avant 19 permet de faire avancer le drone tandis qu'un tangage arrière 20 entraînant un recul du drone ;
- le roulis est l'inclinaison du drone par rapport à un second axe 21 compris dans le plan du quadricoptère 8, perpendiculaire au premier axe 18. Un roulis gauche 22 entraîne une progression du drone 8 sur sa gauche tandis qu'un roulis droit 23 entraîne une progression du drone 8 sur sa droite ;
- le lacet est le pivotement du drone 8 par rapport à son axe vertical 24, un pivot gauche 25 entraînant une rotation du drone 8 vers la gauche tandis qu'un pivot droit 26 entraîne une rotation du drone 8 vers la droite ;
- la variation d'altitude comprend tout déplacement vertical selon l'axe 24 soit en vol - monter ou descendre - soit pour débuter ou arrêter ce vol
- décollage ou atterrissage.

Outre ces fonctions élémentaires classiques, un drone 8 conforme à l'invention peut mettre en oeuvre, pour son pilotage, des fonctions élémentaires spécifiques telles que l'atterrissage d'urgence ou la simulation d'un tir sur une cible, ces nouvelles fonctions étant mises en oeuvre comme décrit ultérieurement.

En résumé, ces fonctions permettent d'effectuer les opérations suivantes : décoller, atterrir, atterrir d'urgence, monter, descendre, pivoter à droite, pivoter à gauche, avancer, reculer, déplacer à droite, translater à gauche, simuler un tir sur une cible.

Pour activer au moins une de ces fonctions, le dispositif 10 utilise son détecteur d'inclinaisons 12 relié à un moyen 14 de commande du drone. Pour transmettre des commandes au drone 8, ce moyen 14 peut alors utiliser une technologie filaire ou non-filaire, par exemple du type *Bluetooth* (marque déposée du Bluetooth SIG, Inc.). Également, dans une autre variante, le moyen 14 communique avec un émetteur-relais 15 qui effectue une radiotransmission des commandes.

Dans cette réalisation, les fonctions élémentaires de pilotage commandées via l'inclinaison du dispositif 10 de commande comprennent le tangage, le roulis, l'atterrissage d'urgence et la simulation de tir.

De fait, l'axe 18 de tangage, l'axe 21 de roulis et l'axe 24 de déplacement vertical ont été représentés par rapport au dispositif 10 de commande puisque toute inclinaison du dispositif 10 par rapport à ces axes est reproduite par le drone.

A titre d'exemple, une inclinaison du dispositif 10 de commande selon un angle α par rapport à son axe 18 de tangage commande le drone 8 de manière à incliner ce dernier d'un tel angle α par rapport à son axe de tangage 1 8.

Dès lors, il est possible d'effectuer un pilotage du drone par inclinaisons du dispositif 10 de commande de telle sorte que, de façon pratique, les inclinaisons du dispositif 10 soient équivalente à des inclinaisons d'un manche de pilotage virtuel.

Par ailleurs, certaines fonctions élémentaires sont commandées de façon spécifique à l'invention. A titre d'exemple, un atterrissage d'urgence ou la simulation d'un tir sur une cible par le drone peuvent être commandés respectivement par un retournement complet, ou un mouvement horizontal saccadé, du dispositif 10 de commande.

Dans cette réalisation préférée, le dispositif 10 est un appareil multimédia portable, tel qu'un téléphone cellulaire du type *iPhone* ou un reproducteur de contenus multimédia du type *iPod Touch* (marques déposées de la société Apple Inc., USA).

Ces dispositifs peuvent également être munis d'une dalle tactile 16 qui est alors utilisée pour activer/désactiver le pilotage par inclinaisons du dispositif et pour commander d'autres fonctions élémentaires de pilotage par appui sur des boutons virtuels. Plus précisément, la dalle tactile 16 affiche un bouton 30 qui requiert un contact, typiquement du pouce, pour activer la commande du drone par inclinaisons du dispositif.

Cette touche d'activation permet notamment d'assurer la stabilité du drone lorsque ce dernier est équipé d'un système de stabilisation autonome tel que, en l'absence de toute commande de l'utilisateur, le drone à voilure tournante se maintient en équilibre - vol stationnaire.

Ainsi, un utilisateur peut simplement enlever son pouce de la surface d'activation 30 pour que, en l'absence d'autres commandes de pilotage, ce système automatique assure la stabilisation du drone.

En d'autres termes, le drone s'immobilise en l'air à l'aide de commandes exploitant des mesures issues d'actionneurs embarqués sur le drone comme: un accéléromètre, un gyromètre, un télémètre à ultrasons fournissant son altitude et/ou une caméra vidé permettant de déterminer sa vitesse, de la manière exposée dans le WO 2009/109711 A2 précité.

Ainsi, l'apprentissage du pilotage est plus rapide et plus sûr puisque les commandes de pilotage ne visent plus à stabiliser le drone mais à entraîner son déplacement d'un point d'équilibre à un autre.

Par ailleurs, les désactivations de la commande du drone par inclinaisons du dispositif de commande permettent d'annuler les dérives ou erreurs du détecteur.

En d'autres termes, lors de chaque activation de la commande du drone par inclinaisons du dispositif de commande, le repère 20/21 de commande est réinitialisé.

La dalle tactile affiche des zones 32, 34, 36, 38, 40 et 42 telles que la surface définie par chacune de ces zones commande une fonction élémentaire de pilotage.

De façon analogue à une console de jeu vidéo, quatre zones 32, 34, 36 et 38 peuvent être associées à quatre opérations, deux à deux complémentaires, telles que monter (zone 32) et descendre (zone 34) ou pivoter à gauche (zone 36) et pivoter à droite (zone 38).

Dans ce cas, ces quatre zones 32, 34, 36 et 38 sont groupées sur la dalle tactile de façon à définir une zone de contrôle typique pour une manette de jeu vidéo.

Par ailleurs, une même zone 40 peut être associée aux opérations d'atterrir ou de décoller. Ainsi, un contact avec cette zone 40 entraîne soit un décollage du drone lorsque ce dernier est à terre, soit un atterrissage lorsqu'il en vol.

En outre une zone 42 peut être associée à un atterrissage d'urgence du drone, cet atterrissage d'urgence s'effectuant de façon plus rapide qu'un atterrissage classique.

Il convient de noter que l'écran de contrôle du dispositif 10 conforme à l'invention présente cinq boutons à contrôler pour piloter un drone tandis qu'une console de jeu vidéo requiert huit boutons de contact, ou de commande, pour effectuer ce contrôle.

En outre, les cinq boutons sont situés de façon à optimiser le pilotage du drone : le bouton d'activation/désactivation du pilotage par inclinaisons du dispositif est accessible au pouce droit tandis que les boutons contrôlant le pivot ou le mouvement vertical du drone sont accessibles au pouce gauche, les boutons centraux étant accessibles aux pouces gauche ou droit.

En résumé, comme cela a été mentionné plus haut, les fonctions élémentaires de pilotage selon le procédé conforme à l'invention peuvent être activées au moyen de touches commandant des fonctions élémentaires de pilotage telles que :

| | |
|---|---|
| Dh | Avancer |
| Db | Reculer |
| L | Pivoter à gauche |
| R | Pivoter à droite |
| Dg | Translation vers la gauche |
| Dd | Translation vers la droite |
| Dg+Dh | Virage en vélo antihoraire |
| Dd+Dh | Virage en vélo horaire |
| Ah | Monter |
| Ab | Descendre |

À ces fonctions élémentaires s'ajoutent les séquences automatiques de décollage et d'atterrissage.

Les fonctions "Tourner à gauche" et "Tourner à droite" peuvent être dédoublées respectivement en "Pivoter à gauche" et "Virage en vélo antihoraire" d'une part, et "Pivoter à droite" et "virage en vélo horaire" d'autre part, la fonction "Pivoter" s'appliquant en mode vol stationnaire et la fonction "Virage en vélo" s'appliquant au mode translation.

Bien entendu, toute autre règle de correspondance peut être établie sans sortir du cadre de l'invention.

Dans une variante de mise en oeuvre, certaines fonctions élémentaires de pilotage peuvent être également commandées par des tracés formés avec le doigt sur la dalle tactile, par exemple :

| | |
|---|---|
| Tracé du centre vers le haut | Avancer |
| Tracé du centre vers le bas | Reculer |
| Tracé du centre vers la gauche | Translation vers la gauche |
| Tracé du centre vers la droite | Translation vers la droite |
| Tracé circulaire antihoraire | Pivoter à gauche |
| Tracé circulaire horaire | Pivoter à droite |
| Tracé du centre vers le coin haut gauche | Virage vélo antihoraire |
| Tracé du centre vers le coin haut droit | Virage vélo horaire |
| Tracé du bas vers le haut | Monter/décoller |
| Tracé du haut vers le bas | Descendre |
| Tracé du haut vers le bas, puis horizontal | Atterrir |

La présente invention est susceptible de nombreuses variantes. Par exemple, un atterrissage automatique d'urgence du drone peut être associé à un retournement complet du dispositif - pivotement de 180° selon l'axe 18.

Finalement, il convient de noter que le pilotage d'un modèle réduit au moyen d'inclinaisons d'un dispositif de commande peut être mis en oeuvre tant pour des drones aériens, du type hélicoptère ou avion, que pour des modèles réduits maritimes, sous-marins ou terrestres.

Selon une autre variante de l'invention, le dispositif de commande permet d'afficher des images prises par une caméra embarquée dans le drone piloté. En effet, la dalle tactile utilisée pour la commande peut afficher des images reçues par télétransmission.

Finalement, selon une autre variante, le dispositif de commande peut utiliser un logiciel de reconnaissance vocale pour activer/désactiver une fonction élémentaire de pilotage telle que la simulation du tir sur une cible.

## Revendications

1. Dispositif (10) de pilotage d'un drone (8) pourvu d'un système de stabilisation autonome du drone en vol stationnaire en l'absence de toute commande d'un utilisateur, **caractérisé en ce qu'**il comprend :
- un détecteur (12) d'inclinaisons du boîtier du dispositif ;
- une dalle tactile (16) affichant une pluralité de zones tactiles (30, 32, 34,36,38,40,42);
- des moyens pour détecter des signaux émis :
· par le détecteur (12) d'inclinaisons du boîtier, ou
· par les zones tactiles (32, 34, 36, 38, 40, 42) ; et
- des moyens pour transformer lesdits signaux détectés en commandes de pilotage, et pour transmettre au drone ces commandes de pilotage ;
ce dispositif comprenant des moyens, commandés par l'une des zones tactiles formant bouton (30) d'activation/désactivation, pour faire basculer alternativement le mode de pilotage du drone entre :
- un mode d'activation du système de stabilisation autonome du drone, mode dans lequel lesdites commandes de pilotage transmises au drone résultent de la transformation des signaux émis par les zones tactiles, et
- un mode de désactivation du système de stabilisation autonome du drone, mode dans lequel lesdites commandes de pilotage transmises au drone résultent de la transformation des signaux émis par le détecteur d'inclinaisons du boîtier.

2. Dispositif (10) selon la revendication 1, comprenant des moyens de réinitialisation du repère du dispositif, activés à chaque basculement vers ledit mode de désactivation.

3. Dispositif (10) selon la revendication 1, dans lequel ce dispositif est un appareil multimédia portable de type téléphone cellulaire et/ou lecteur de contenus multimédia.

4. Dispositif (10) selon la revendication 1, dans lequel la dalle tactile comprend au moins quatre zones tactiles (32, 34, 36, 38) pour commander des fonctions élémentaires de pilotage activées par contact de ces zones tactiles (32, 34, 36, 38), lesdites fonctions étant des fonctions du groupe comprenant : décoller, atterrir, monter, descendre, pivoter à droite, pivoter à gauche, avancer, reculer, translater vers la droite, translater vers la gauche.

5. Dispositif (10) selon la revendication 1, comprenant des moyens pour commander un atterrissage automatique d'urgence lorsque le dispositif de pilotage (10) est retourné.

6. Dispositif (10) selon la revendication 1, comprenant des moyens pour afficher sur la dalle tactile (16) une image prise par une caméra embarquée sur le drone (8).

7. Procédé de pilotage d'un drone (8) pourvu d'un système de stabilisation autonome du drone en vol stationnaire en l'absence de toute commande d'un utilisateur, au moyen d'un dispositif selon l'une des revendications 1 à 6 muni d'un détecteur (12) d'inclinaisons du dispositif et d'une dalle tactile (16) affichant une pluralité de zones tactiles (32, 34, 36, 38, 40, 42), ce procédé étant **caractérisé par** les étapes suivantes :
- détecter des signaux émis par les zones tactiles et par le détecteur d'inclinaisons du boîtier ;
- dans un mode d'activation du système de stabilisation autonome du drone, transformer en commandes de pilotage les signaux émis par lesdits zones tactiles (32, 34, 36, 38, 40, 42) ;
- alternativement, dans un mode de désactivation du système de stabilisation autonome du drone, transformer en commandes de pilotage les signaux émis par ledit détecteur (12) d'inclinaisons du boîtier ;
- transmettre au drone lesdites commandes de pilotage ;
- dans ledit mode d'activation :
· stabiliser le drone en vol stationnaire en l'absence de commande de pilotage émanant du dispositif, et
· déplacer le drone d'un point d'équilibre à un autre en fonction desdites commandes de pilotage en cas de transmission au drone de commandes de pilotage ;
- alternativement, dans ledit mode de désactivation, contrôler le mouvement du drone par lesdites commandes de pilotage transmises au drone, ces commandes correspondant à des fonctions élémentaires de pilotage activées par contact desdites zones tactiles (32, 34, 36, 38).

8. Procédé de pilotage selon la revendication 7, dans lequel lesdites fonctions élémentaires de pilotage sont des fonctions du groupe comprenant :
décoller, atterrir, monter, descendre, pivoter à droite, pivoter à gauche, avancer, reculer, translater vers la droite, translater vers la gauche.

## Claims

1. Device (10) for piloting a drone (8) provided with an autonomous system for stabilizing the drone while hovering in the absence of any user command, **characterized in that** it comprises:
- a detector (12) of inclinations of the casing of the device;
- a touch pad (16) displaying a plurality of touch zones (30, 32, 34, 36, 38, 40, 42);
- means for detecting signals emitted:
· by the detector (12) of inclinations of the casing, or
· by the touch zones (32, 34, 36, 38, 40, 42); and
- means for transforming the said detected signals into piloting commands, and for transmitting these piloting commands to the drone;
this device comprising means, controlled by one of the touch zones forming an activation/deactivation button (30), for toggling the mode of piloting of the drone alternately between:
- a mode of activation of the autonomous system for stabilizing the drone, in which mode the said piloting commands transmitted to the drone result from the transformation of the signals emitted by the touch zones, and
- a mode of deactivation of the autonomous system for stabilizing the drone, in which mode the said piloting commands transmitted to the drone result from the transformation of the signals emitted by the detector of inclinations of the casing.

2. Device (10) according to Claim 1, comprising means for reinitializing the reference frame of the device, which are activated with each toggling to the said deactivation mode.

3. Device (10) according to Claim 1, in which this device is a portable multimedia apparatus of cellular telephone and/or multimedia contents reader type.

4. Device (10) according to Claim 1, in which the touch pad comprises at least four touch zones (32, 34, 36, 38) for controlling elementary piloting functions activated by contact of these touch zones (32, 34, 36, 38), the said functions being functions of the group comprising: take off, land, climb, descend, swivel right, swivel left, forward, back, shift to the right, shift to the left.

5. Device (10) according to Claim 1, comprising means for controlling an automatic emergency landing when the piloting device (10) is overturned.

6. Device (10) according to Claim 1, comprising means for displaying on the touch pad (16) an image captured by a camera onboard the drone (8).

7. Method for piloting a drone (8) provided with an autonomous system for stabilizing the drone while hovering in the absence of any user command, by means of a device according to one of Claims 1 to 6 furnished with a detector (12) of inclinations of the device and a touch pad (16) displaying a plurality of touch zones (32, 34, 36, 38, 40, 42),
this method being **characterized by** the following steps:
- detecting signals emitted by the touch zones and by the detector of inclinations of the casing;
- in a mode of activation of the autonomous system for stabilizing the drone, transforming into piloting commands the signals emitted by the said touch zones (32, 34, 36, 38, 40, 42);
- alternately, in a mode of deactivation of the autonomous system for stabilizing the drone, transforming into piloting commands the signals emitted by the said detector (12) of inclinations of the casing;
- transmitting the said piloting commands to the drone;
- in the said activation mode:
· stabilizing the drone while hovering in the absence of any piloting command emanating from the device, and
· moving the drone from one equilibrium point to another as a function of the said piloting commands in the case of transmission of piloting commands to the drone;
- alternately, in the said deactivation mode, controlling the motion of the drone by the said piloting commands transmitted to the drone, these commands corresponding to elementary piloting functions activated by contact of the said touch zones (32, 34, 36, 38).

8. Piloting method according to Claim 7, in which the said elementary piloting functions are functions of the group comprising: take off, land, climb, descend, swivel right, swivel left, forward, back, shift to the right, shift to the left.

## Patentansprüche

1. Vorrichtung (10) zum Steuern einer Drohne (8), die mit einem System zum selbstständigen Stabilisieren der Drohne im stationären Flug bei Fehlen jeglichen Befehls eines Anwenders versehen ist, **dadurch gekennzeichnet, dass** sie umfasst:
- einen Detektor (12) für Neigungen des Gehäuses der Vorrichtung;
- einen Berührungsbildschirm (16), um mehrere Berührungszonen (30, 32, 34, 36, 38, 40, 42) anzuzeigen;
- Mittel zum Detektieren von Signalen, die
- von dem Detektor (12) für Neigungen des Gehäuses oder
- von den Berührungszonen (32, 34, 36, 38, 40, 42) gesendet werden; und
- Mittel, um die detektierten Signale in Steuerbefehle zu transformieren und um diese Steuerbefehle zu der Drohne zu senden;
wobei diese Vorrichtung Mittel umfasst, die von einer der Berührungszonen gesteuert werden und eine Aktivierungs-/Deaktivierungstaste (30) bilden, um die Steuerbetriebsart der Drohne abwechselnd zwischen
- einer Betriebsart zum Aktivieren des Systems zum selbstständigen Stabilisieren der Drohne, wobei in dieser Betriebsart die zu der Drohne gesendeten Steuerbefehle die Transformation der durch die Berührungszonen gesendeten Signale zur Folge haben und
- einer Betriebsart zum Deaktivieren des Systems zum selbstständigen Stabilisieren der Drohne, wobei in dieser Betriebsart die zu der Drohne gesendeten Steuerbefehle die Transformation der von dem Detektor für die Neigung des Gehäuses gesendeten Signale zur Folge haben,
hin und her zu schalten.

2. Vorrichtung (10) nach Anspruch 1, die Mittel zum erneuten Initialisieren des Bezugssystems der Vorrichtung umfasst, die bei jedem Schalten in die Deaktivierungsbetriebsart aktiviert werden.

3. Vorrichtung (10) nach Anspruch 1, wobei diese Vorrichtung ein tragbares Multimediagerät des Typs Zellentelephon und/oder Leser für Multimediainhalte ist.

4. Vorrichtung (10) nach Anspruch 1, wobei die Berührungsbildschirm wenigstens vier Berührungszonen (32, 34, 36, 38) aufweist, um die elementaren Steuerfunktionen zu steuern, die durch Kontakt dieser Berührungszonen (32, 34, 36, 38) aktiviert werden, wobei diese Funktionen Funktionen der Gruppe sind, die umfasst: Starten, Landen, Steigen, Sinken, Schwenken nach rechts, Schwenken nach links, Vorwärtsbewegen, Rückwärtsbewegen, Verlagern nach rechts, Verlagern nach links.

5. Vorrichtung (10) nach Anspruch 1, die Mittel zum Steuern einer automatischen Notlandung umfasst, wenn die Steuervorrichtung (10) umgedreht wird.

6. Vorrichtung (10) nach Anspruch 1, die Mittel zum Anzeigen eines Bildes, das von einer Kamera an Bord der Drohne (8) aufgenommen wird, auf dem Berührungsbildschirm (16) umfasst.

7. Verfahren zum Steuern einer Drohne (8), die mit einem System zum selbstständigen Stabilisieren der Drohne im stationären Flug bei Fehlen jeglichen Befehls eines Anwenders versehen ist, mittels einer Vorrichtung nach einem der Ansprüche 1 bis 6, die mit einem Detektor (12) für Neigungen der Vorrichtungen und mit einem Berührungsbildschirm (16), der mehrere Berührungszonen (32, 34, 36, 38, 40, 42) anzeigt, versehen ist, wobei dieses Verfahren **gekennzeichnet ist durch** die folgenden Schritte:
- Detektieren von Signalen, die von den Berührungszonen und von dem Detektor für Neigungen des Gehäuses ausgesendet werden;
- in einer Betriebsart zum Aktivieren des Systems zum selbstständigen Stabilisieren der Drohne Transformieren der von den Berührungszonen (32, 34, 36, 38, 40, 42) gesendeten Signale in Steuerbefehle;
- alternativ in einer Betriebsart zum Deaktivieren des Systems zum selbstständigen Stabilisieren der Drohne Transformieren der von dem Detektor (12) für Neigungen des Gehäuses gesendeten Signale in Steuerbefehle;
- Senden der Steuerbefehle zu der Drohne;
- in der Aktivierungsbetriebsart
· Stabilisieren der Drohne im stationären Flug bei Fehlen eines von der Vorrichtung ausgehenden Steuerbefehls und
· Verlagern der Drohne von einem Gleichgewichtspunkt in einen anderen als Funktion der Steuerbefehle im Fall des Sendens von Steuerbefehlen zu der Drohne;
- alternativ in der Deaktivierungsbetriebsart Steuern der Bewegung der Drohne **durch** die zu der Drohne gesendeten Steuerbefehle, wobei diese Befehle elementaren Steuerfunktionen entsprechen, die **durch** Kontakt mit den Berührungszonen (32, 34, 36, 38) aktiviert werden.

8. Steuerverfahren nach Anspruch 7, wobei die elementaren Steuerfunktionen Funktionen der Gruppe sind, die Folgendes umfasst: Starten, Landen, Steigen, Sinken, Schwenken nach rechts, Schwenken nach links, Vorwärtsbewegen, Rückwärtsbewegen, Verlagern nach rechts, Verlagern nach links.
